# EUROPEAN PATENT APPLICATION

(11) **EP 0 798 891 A2**
(43) Date of publication of application: **01.10.1997**
(21) Application number: 96118366.2
(22) Date of filing: 15.11.1996
(51) Int. Cl.: H04L 9/32, H03M 13/00

(54) **Identification number issuing device and identification number verification device**

(30) Priority: 29.03.1996 JP 76884/96
(71) Applicant: MITSUBISHI DENKI KABUSHIKI KAISHA, Tokyo 100 (JP)
(72) Inventor: Yoshida, Hideo, Chiyoda-ku, Tokyo 100 (JP); Nakamura, Takahiko, Chiyoda-ku, Tokyo 100 (JP); Nishikawa, Keiichi, Chiyoda-ku, Tokyo 100 (JP)
(74) Representative: Pfenning, Meinig & Partner

(57) **Abstract**

An identification number issuing device comprising a code converter portion for converting an identification number character string constructed of character string of alphabets, numerals and the like into codes having one-to-one correspondence to letters (characters), and a check and selection portion for selecting as an identification number the character string corresponding to the code string that is determined to meet the Reed-Solomon code rule with the code being a symbol and the string of the symbol being a code length. The identification number is issued based on the Reed-Solomon code of a generating polynomial having a plurality of initial elements as roots, and for additional issuing, identification numbers are additionally issued based on the Reed-Solomon code with the number of elements of the generating polynomial reduced by 1.

## Description

### BACKGROUND OF THE INVENTION

### FIELD OF THE INVENTION

The present invention relates to an identification number issuing device for an identification number that is issued for the verification of the identity of an individual and an identification number verification device that verifies the identification number, and the present invention particularly considers error detection and error correction at the input of the identification number without giving a sense of unnaturalness in operation.

### DESCRIPTION OF THE RELATED ART

The identification number method is an indispensable method to recognize a particular user in a card system, a payment system or the like, and finds applications in a diversity of fields.

In the card system, identification number information is written on a card, and is authenticated by an identification number a user can easily remember. On the other hand, in a payment system in which service is provided to a particular user, authentication is typically performed by transmitting to the user an identification number for verifying the identity of the user, and by allowing the user to input the identification number.

The identification number used in the payment system requires a larger number of digits than the card system. To help the user remember the identification number, it may include alphabets ABC and the like and numbers.

When the user inputs the identification number, a system conventionally performs an all-number search for the identification numbers issued to determine the input identification number agrees any of the issued identification numbers.

If the identification number is of a large digit number, it is subject to an error in transmission, and the user is likely to perform an erroneous number input. For this reason, when an identification number issued, a redundancy is provided to the identification number.

As one of the prior art, Japanese Unexamined Patent Publication (Kokai) No. 4-40128 uses an identification number that is made of an increment identification number with a redundancy bit added.

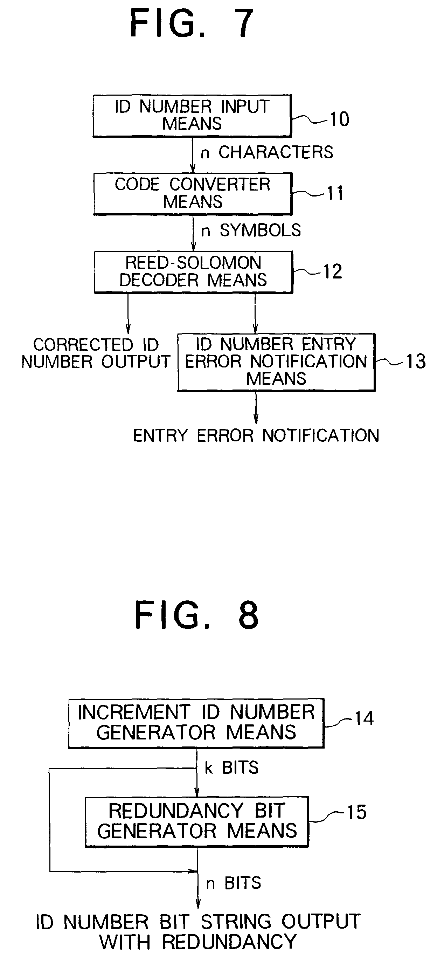

Fig. 8 is a block diagram of a device that generates a prior art identification number with a redundancy added, in which there are shown an increment ID number generating means 14 for generating an increment identification number, for example, using a counter or the like, and a redundancy bit generating means 15 for adding a redundancy bit to the increment identification number generated by the increment ID number generating means 14.

The prior art identification number having a redundancy comprises an original identification number portion and a redundancy portion added thereto.

For example, the prior art redundancy bit generating means 15 can correct an error of 1 bit in the identification number by generating a check bit of the systematic code of a Hamming code of a generating polynomial ${\text{g(x)=x}}^{\text{3}} \text{+ x + 1}$.

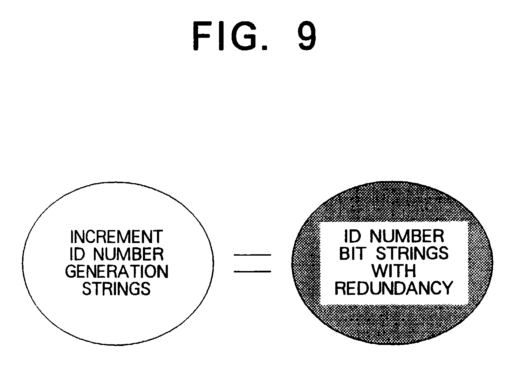

Fig. 9 is a diagram showing the method of generating identification numbers with redundancy added in the form of set, in which the number of elements of increment identification numbers that are a source agrees with the number of identification numbers with redundancy added.

The authentication is conventionally performed as above, and have the following problems.

Firstly, since the prior art adds a redundancy bit to an increment identification number, the identification number is in principle expressed by a bit format or a numeral only, and this makes an identification number a user finds it difficult to remember.

Secondly, since, in the prior art, in the identification number of fixed length, the increment identification number length and redundancy bit length of the increment ID number generating means are fixed, error detection and correction capabilities are fixed regardless of the number of issues of identification numbers. The number of identification numbers in excess of the number of identification numbers generated by the increment ID number generating means 14 of fixed length cannot be issued.

### SUMMARY OF THE INVENTION

The present invention has been developed to solve the above problems, according to a first aspect of the present invention, there is provided identification number issuing device for issuing an identification number constructed of a character string such as a series of alphabets, numerals and the like, comprises code converter means for converting the character string into a code having one-to-one correspondence to a character, and check and selection means for determining whether the code converted by the code converter means meets a Reed-Solomon code rule with the code being a symbol and the string of the symbol being a code length, and for selecting as an identification number the character string corresponding to the code that is determined to meet the Reed-Solomon code rule.

According to a second aspect of the present invention, the code converter means converts the character string into a 7-bit ASCII code having one-to-one correspondence to a character, and the check and selection means selects as an identification number the character string corresponding to the code converted by the code converter means that meets a Reed-Solomon code rule of GF(2⁷) with the code being a symbol and the string of symbol being a code length.

According to a third aspect of the present invention, the code converter means converts the character string into a 6-bit code having one-to-one correspondence to a character, and the check and selection means selects as an identification number the character string corresponding to the code converted by the code converter means that meets a Reed-Solomon code rule of GF(2⁶) with the code being a symbol and the string of the symbol being a code length.

According to a fourth aspect of the present invention, the code converter means selects 32 characters out of alphabets or numerals and converts the selected characters into a 5-bit code having one-to-one correspondence to a character, and the check and selection means selects as an identification number the character string corresponding to the code converted by the code converter means that meets a Reed-Solomon code rule of GF(2⁵) with the code being a symbol and the string of the symbol being a code length.

According to a fifth aspect of the present invention, the code converter means selects 16 characters out of alphabets or numerals and converts the selected characters into a 4-bit code having one-to-one correspondence to a character, and the check and selection means selects as an identification number the character string corresponding to the code converted by the code converter means that meets a Reed-Solomon code rule of GF(2⁴) with the code being a symbol and the string of the symbol being a code length.

According to a sixth aspect of the present invention, the check and selection means selects as an identification number the character string corresponding to the code converted by the code converter means meets a Reed-Solomon code rule of a generating polynomial having a plurality of Galois field elements as roots with the code being a symbol and the string of the symbol being a code length.

According to a seventh aspect of the present invention, in the device according to a sixth aspect of the present invention, when all identification numbers that meets the Reed-Solomon code rule of the generating polynomial having tee plurality of Galois field elements as roots are used, the check and selection means additionally selects as an identification number the character string corresponding to the code that meets a Reed-Solomon code rule of the generating polynomial having the plurality of Galois field elements with one Galois field element reduced.

According to a eighth aspect of the present invention, the device according to a seventh aspect of the present invention comprises memory means for storing the latest identification number that is a character string constructed as a Reed-Solomon code and issued as an identification number in the sequence of coding weight, and issuing means for issuing the identification number except the identification numbers which are already issued according to the sequence of coding weight and which satisfy the generating polynomial.

According to a ninth aspect of the present invention, the device according to a first aspect of the present invention comprises the issuing means that selects and issues, as an identification number, according to the sequence of coding weight, the character string selected by the check and selection mean.

According to a tenth aspect of the present invention, the device according to a eighth aspect of the present invention comprises memory means for storing the latest identification number issued according to the sequence of coding weight or the code having one-to-one correspondence to the latest issued identification number.

According to an eleventh aspect of the present invention, there is provided identification number verification device comprises code converter means to which the identification number issued by the identification number issuing device of the first aspect of the present invention, and which converts the identification number into a code having one-to-one correspondence to a character of the identification number, decoder means for decoding the code into a Reed-Solomon code and detecting an error, and notifying means for notifying an person who inputs, that the identification number that is found to contain an error is due to an erroneous input.

According to a twelfth aspect of the present invention, the decoder means detects an error and corrects the identification number found to be erroneous, and recognizes the corrected data as an identification number.

According to a thirteenth aspect of the present invention, the device according to twelfth aspect of the present invention comprises check means that checks whether the result of the error correction by the decoder means meets identification number string rule.

According to a fourteenth aspect of the present invention, the device according to twelfth aspect of the present invention comprises missing information generating means that notifies the decoder means, when the code corresponding to a character input is not found in the code converter means, of the position of the corresponding code string as a missing position, whereby the decoder means corrects the missing error in response to the notification from the missing information generating means.

### BRIEF DESCRIPTION OF THE DRAWINGS

Fig. 1 is a block diagram showing the identification number issuing device of the embodiment 1 of the present invention.

Fig. 2 is a flow diagram showing the identification number generation process in the identification number issuing device in Fig. 1.

Fig. 3 is a diagram showing the set when identification numbers are selected in the identification number generation according to the embodiment 1.

Fig. 4 is a flow diagram showing the identification number generation according to the embodiment 5 of the present invention.

Fig. 5 is a diagram showing the set when identification numbers are selected in the identification number generation according to the embodiment 5.

Fig. 6 is a block diagram showing the identification number issuing device of the embodiment 6 of the present invention.

Fig. 7 is a block diagram showing the identification number issuing device of the embodiment 7 of the present invention.

Fig. 8 is a block diagram showing the prior art identification number issuing device.

Fig. 9 is a diagram showing the set of the prior art identification number generated.

### DESCRIPTION OF THE PREFERRED EMBODIMENTS

### Embodiment 1.

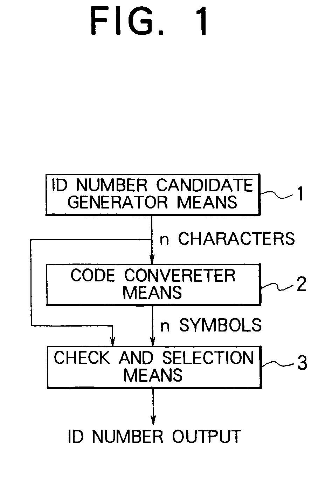

Fig. 1 shows the organization of the identification number issuing device of the present invention, in which there are shown ID number candidate generator means 1 for generating an identification number candidate, code converter means 2 for converting the identification number candidate generated by the ID number candidate generator means 1 into an ASCII code, for example, and check and selection means 3 for checking whether the ASCII code string converted by the code converter means 2 meets the rule as the Reed-Solomon code and for selecting only the code string that meets the Reed-Solomon code rule.

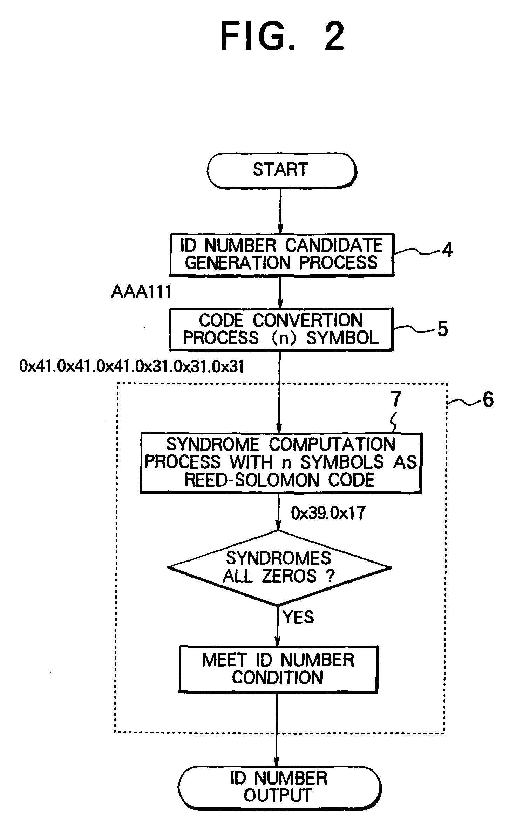

Fig. 2 is a flow diagram showing the issuing process of an identification number in the identification number issuing device of the present invention.

Referring to Figs. 1 and 2, the operation of the identification number issuing device is discussed. First, the ID number candidate generator means 1 generates n characters according to the format of an identification number system. By n is meant a character length. This character is a string of alphabets or numerals, for example. By way of example, suppose that an identification number candidate in an identification number system is made up of three upper-case alphabets and three numerals like AAA111. This corresponds to Step 4 in Fig. 2. The generation of a character may be per formed by a counter or the like, and a numeral generated may be used instead of the character.

The code converter means 2 converts the n characters in units of character into n symbol code strings in which a 7-bit ASCII code is a symbol. The above identification number candidate is 0x41, 0x41, 0x41, 0x31, 0x31, 0x31 in hexadecimal expression. This corresponds to Step 5, and is performed, for example through table conversion or the like using ROM (read only memory) or the like. This step may be performed by a counter that works as the ID number candidate generator means 1 as well.

The check and selection means 3 checks to see if the identification number candidate string meets conditions as the Reed-Solomon code, and issues an identification number if the conditions are met. This corresponds to Step 6 in Fig. 2. Applied as an example of Reed-Solomon code rule is the rule of a Reed-Solomon code of GF(2⁷) with a source polynomial x⁷ + x⁶ + 1 , α¹ and α² as roots of a generating polynomial, and one symbol correctable.

In a specific method, a syndrome computation is performed to the identification number string as in Step 7 in Fig. 2, and if the syndromes corresponding to the roots α¹ and α² of the generating polynomial are all 0 (zero), the identification number string is issued as an identification number. In the above-described identification number candidate AAA111, the syndromes are 0x39 and 0x17, and fail to meet the issuing rule of identification number, but AAC942 (ASCII codes are 0x41, 0x41, 0x43, 0x39, 0x34, 0x32 in hexadecimal), for example, results in syndromes 0x00, 0x00, and is thus selected and issued as an identification number.

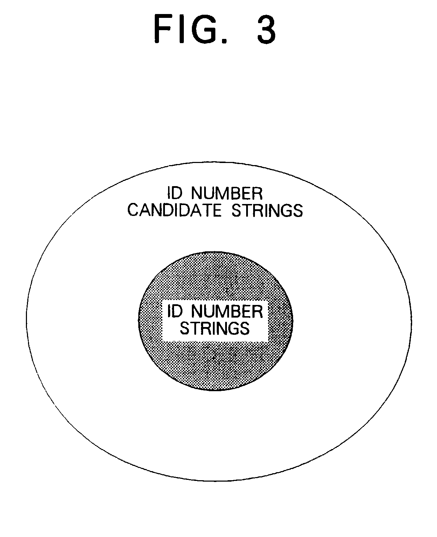

Fig. 3 shows the diagram showing the set according to the embodiment 1 corresponding to Fig. 9, with reference to which the prior art error correction in the issuing method is described. As seen from Fig. 3, according to the present invention, the identification number is issued by applying the condition as the Reed-Solomon code to candidates for identification numbers. Namely, the identification numbers are a subset of the character strings that are the identification number candidates. In the above identification number system, 17576000 identification number candidates are available, and among them, a subset that meets the above-described Reed-Solomon code rule includes 1073 numbers.

### Embodiment 2.

According to the embodiment 1, the character of the identification number is converted into an ASCII code, and if the identification number is constructed of alphabets and numerals, a total of 36 characters are used, and a code is constructed of 6 bits, and the identification number is organized according to the Reed-Solomon code rule of GF(2⁶).

### Embodiment 3.

According to the embodiment 2, the identification number is constructed of alphabets and numerals and any of the 36 characters may be placed in any position within the identification number string; alternatively, the identification number may be constructed of alphabets only or alphabets mixed with a numeral placed in a fixed position, and in this case, the number of character candidates is 26 characters, the code is constructed of 5 bits (permitting up to 32 characters), and the identification number is organized according to the Reed-Solomon code rule of GF(2⁵).

### Embodiment 4.

According to the embodiment 3, the identification number is constructed of alphabets only or alphabets mixed with a numeral placed in a fixed position; alternatively, the identification number string is constructed of numerals only or 16 alphabets, or both numerals and 16 alphabets mixed but their positions fixed, or a combination of a total of 16 numerals and alphabets selected from the numerals and alphabets, and in this case, the maximum number of character candidates are 16 characters, the code is constructed of 4 bits, and the identification number is organized according to the Reed-Solomon code rule of GF(2⁴). According to the embodiment 1, in the identification number string of 6 digits, the count of identification numbers that are correctable in one symbol is 1073, and in this embodiment, 65536 identification numbers correctable in one symbol can be issued, and thus the count of issuable identification numbers is substantially increased.

### Embodiment 5.

The Reed-Solomon code that is the rule of the identification number in the ID number candidate generator means 1 of the present invention is capable of detecting and correcting a plurality of characters, namely using a generating polynomial having a plurality of elements as roots. Taking advantage of this, the identification number issuing device of the present invention can issue new identification numbers with correction capability lowered a bit even if the number of issues of the identification numbers reaches its maximum available number.

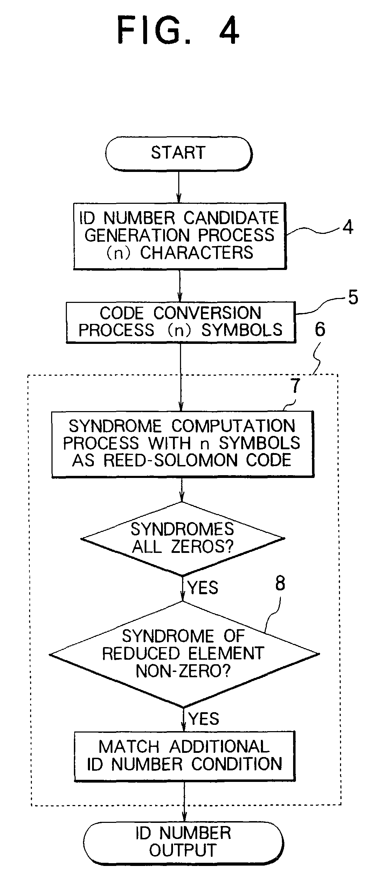

Fig. 4 shows the additional issue process of identification numbers, in which the selection method by the check and selection means 3 in Fig. 1 is changed to Step 8 in Fig. 4 and thus the additional issuing of identification numbers is performed by simply reducing the error detection capability by 1.

At Step 8 in Fig. 4, the syndrome computation identical to that at Step 7 in Fig. 2 is performed, and as for generating elements reduced by 1 for additional issuing, the identification number string candidates having non-zero syndrome are issued as additional identification numbers.

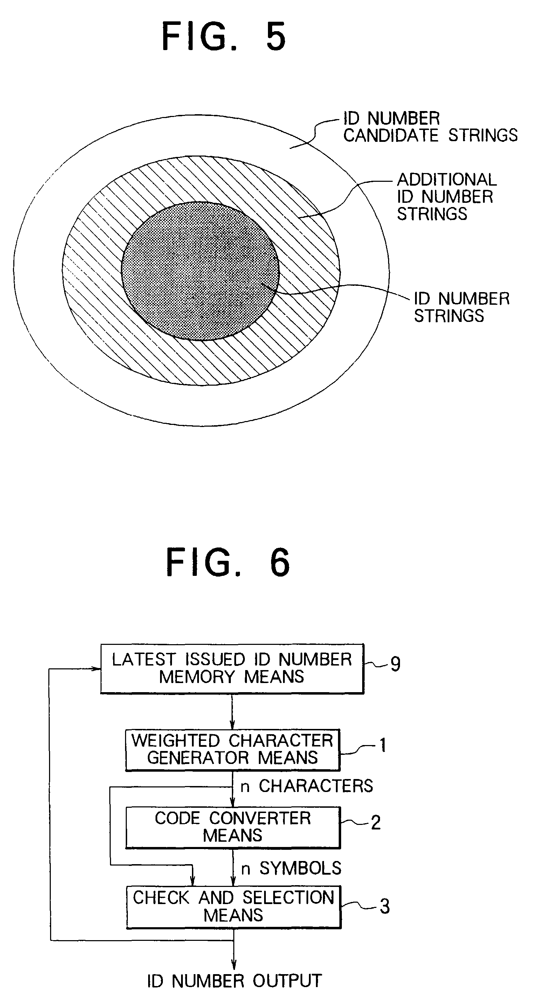

Fig. 5 shows the set of additional issues based on the diagram in Fig. 3. As shown in Fig. 5, the set inclusive of the identification numbers additionally issued includes the set of identification numbers before additional issuing as a proper subset, and the count of the identification numbers can be increased without the need undergoing a major modification in system.

### Embodiment 6.

As an issuing method of the identification number of the present invention, for example, the identification number is efficiently generated by using the sequence according to the coding weight having one-to-one correspondence with a letter (character). Fig. 6 shows such an organization, which comprises latest issued ID number memory means 9 in addition to the organization in Fig. 1; in response to the weight of the code, the ID number candidate generator means 1 generates sequentially the identification number candidate having the next weight in succession to the weight of the identification number string stored in the latest issued ID number memory means 9, the code converter means 2 converts it into a code and the check and selection means 3 checks whether the code meets the rule of the identification number.

The coding weight is carried in the order of increasing or in the order of decreasing.

When the code fails to meet the rule of the identification number, the ID number candidate generator means 1 generates an identification number candidate with the next weight, and the check and selection means 3 checks whether the next code meets the rule of the identification number.

When it meets the rule of the identification number, the code is issued as an identification number, and the content of the latest issued ID number memory means 9 is updated with it as the latest issued identification number, and at the next issue, weighted character generator means 1 may generate the identification number candidate character string having the next weight in succession to the weight of the identification number string stored in the latest issued ID number memory means 9.

The above identification number generation method performs the generation of the additional identification number in the same manner as above by allowing the check and selection means 3 to follow the sequence shown in the flow diagram in Fig. 4.

### Embodiment 7.

As discussed above, the preceding embodiments present the identification number issuing device for generating the identification number has been discussed, and this embodiment presents a verification device for checking the identification number is discussed. Fig. 7 shows its organization, in which there are shown an ID number input means 10 to which an identification number holder inputs his own identification number, code converter means 11 for converting into a code the identification number input by the ID number input means 10, Reed-Solomon code decoder means 12 for decoding the code converted by the code converter means into a Reed-Solomon code, and ID number entry error notification means 13 for notifying the identification number holder.

The operation of the device is now discussed. The identification number string input by the ID number input means 10 is converted into a code, character by character, by the code converter means 11. If a character which does not correspond any code is input, a default code may be output in response or the ID number entry error notification means 13 may notify the identification number holder of an identification number entry error at that moment.

The Reed-Solomon code decoder means 12 decodes the code converted identification number string into the Reed-Solomon code, and corrects it if possible, and if not possible, the ID number entry error notification means 13 notifies the identification number holder asking him to enter the identification number again.

When the code string that is the result of correction fails to agree with any of the identification number candidates, the ID number entry error notification means 13 can notify the identification number holder asking for another entry of the identification number.

In the above description, the code converter means 11 outputs a default code if a letter (character) having no correspondence with any code is entered, but the character is regarded as the missing code position, missing code information is generated, and based on the missing code information, the Reed-Solomon code decoder means 12 performs correction of the miss.

Although in the above example, the correction operation is performed, detection capability can be increased by not performing the correction operation with detection only being performed using the syndrome based on the same Reed-Solomon code rule.

Although the present invention employs the Reed-Solomon code, other error correcting codes, such as BCH code, work in the same manner as the Reed-Solomon code.

According to a first aspect of the present invention, as described above, to cope with the first object, the identification number string issued to the user is converted in units of letter (character) into numeral codes, and only strings out of the numeral code strings that meet the condition as the Reed-Solomon code are selected, and thus the identification number issuing device is organized so that it gives an identification number the user can easily remember and both error detection and error correction are performed to.

According to a second aspect of the present invention, since the identification number is issued after the character string is converted to a 7-bit ASCII code having one-to-one correspondence to a character, the computer-based identification number issuing device is easily organized.

According to a third aspect of the present invention, a total of 36 characters inclusive of alphabet letters and numerals are used, and can be converted into a 6-bit code having one-to-one correspondence to a character; after the character string is converted into 6-bit codes, the identification number is issued, and thus the RS code rules and thus the strings that meet the RS code rules are increased, and identification numbers are issued in a larger quantity.

According to a fourth aspect of the present invention, a total of 26 characters of the alphabet letters are used, and can be converted into a 5-bit code having one-to-one correspondence to a character, and the character string can be converted into a 5-bit code even with alphabets and numerals being at fixed positions in the string. Since the identification number is issued after it is converted into a 5-bit code, both the RS code rules and the strings that meet the RS code rules increase, the device according to Claim 4 issues identification numbers in a larger quantity than the device according third aspect of the present invention with the same symbol correction capability remained unchanged.

According to a fifth aspect of the present invention, 16 characters of the alphabet letters are used, and can be converted into a 4-bit code having one-to-one correspondence to a character, and the character string can be converted into a 4-bit code even with 16 alphabets and numerals being at fixed positions in the string. Since the identification number is issued after it is converted into a 4-bit code, both the RS code rules and the strings that meet the RS code rules increase, the device according to fifth aspect of the present invention issues identification numbers in a larger quantity than the device according to fourth aspect of the present invention with the same symbol correction capability remained unchanged.

According to a sixth aspect of the present invention, a plurality of roots of the generating polynomial of the Reed-Solomon code that is the issuing condition of the initial identification number string is used, and thus the device can issue the identification number that automatically corrects an entry error of the identification number.

According to a seventh aspect of the present invention, a plurality of roots of the generating polynomial of the Reed-Solomon code that is the issuing condition of the initial identification number string is used, and when additional identification numbers are issued after all identification numbers are fully issued under the issuing condition of the initial identification number string, identification numbers are additionally issued by reducing the conditions of the roots of the generating polynomial by 1; thus, the count of identification numbers issued is increased without prolonging the length of the identification number and without making the user aware of the additional identification number, and further, error detection and correction capability of the identification number is varied in accordance with the system.

According to an eighth aspect of the present invention, the device comprises memory means for storing the latest issued identification number, and imparts sequentially a weight to a code string that is going to be an identification number candidate, and checks whether the code string meets the generating polynomial; and therefore, the next additional identification number meeting the RS code rule is efficiently issued.

According to a ninth aspect of the present invention, a weight is sequentially imparted to a code string that is going to be an identification number candidate, the next additional identification number meeting the RS code rule is efficiently issued.

According to a tenth aspect of the present invention, the device comprises memory means for storing the latest issued identification number, and imparts sequentially a weight to a code string that is going to be an identification number candidate; therefore, the next additional identification number meeting the RS code rule is efficiently issued.

According to an eleventh aspect of the present invention, the identification number system according to a first aspect of the present invention meets the coding rule of the RS code, and thus an error in the identification number is detected according to the RS code by code converting the identification number string, and the identification number verification device that notifies the user of the error is presented.

According to a twelfth aspect of the present invention, since the identification number meets the coding rule of the RS code, the identification number verification device capable of error detection and error correction according to the RS code by code converting the identification number string is presented.

According to a thirteen aspect of the present invention, there is presented the highly reliable identification number verification device which is provided with checking function to detect strings that fails to meet the identification number issuing rule under correction process.

According to a fourteenth aspect of the present invention, there is presented the identification number verification device that has a higher correction capacity, because the position of a code that fails to meet the rule is decoded as a missing code in correction process when the input identification number is converted into the code.

## Claims

1. An identification number issuing device for issuing an identification number constructed of a character string of alphabets, numerals and the like, comprising:
code converter means (2) for converting the character string into a code having one-to-one correspondence to a character, and
check and selection means (3) for determining whether the code converted by the code converter means meets a Reed-Solomon code rule with the code being a symbol and the string of the symbol being a code length, and for selecting as an identification number the character string corresponding to the code that is determined to meet the Reed-Solomon code rule.

2. The identification number issuing device according to Claim 1, wherein the code converter means (2) converts the character string into a n-bit code having one-to-one correspondence to a character, and the check and selection means (3) selects as an identification number the character string corresponding to the code converted by the code converter means that meets a Reed-Solomon code rule of GF(2ⁿ) with the code being a symbol and the string of symbol being a code length.

3. The identification number issuing device according to Claim 1, wherein the check and selection means (3) selects as an identification number the character string corresponding to the code converted by the code converter means meets a Reed-Solomon code rule of a generating polynomial having a plurality of Galois field elements as roots with the code being a symbol and the string of the symbol being a code length.

4. The identification number issuing device according to Claim 3, wherein when all identification numbers that meets the Reed-Solomon code rule of the generating polynomial having the plurality of Galois field elements as roots are used, the check and selection means (3) additionally selects as an identification number the character string corresponding to the code that meets a Reed-Solomon code rule of the generating polynomial having the plurality of Galois field elements with one Galois field element reduced.

5. The identification number issuing device according to Claim 1 or Claim 4 comprising:
memory means (9) for storing the latest one of the identification numbers that are character strings, each constructed as a Reed-Solomon code and issued as an identification number according to the sequence of coding weight, and
weighted character generator means (1) for generating a character string which is going to be an input to the code converter means and which has the next weight in succession to the weight of the identification number stored in the memory means (9),
whereby the check and selection means (3) selects and issues as an identification number a character string except the identification numbers meeting the generating polynomial and already issued.

6. An identification number verification device comprising:
input means (10) for receiving an identification number having a character string meeting a Reed-Solomon code rule,
code converter means (11) for converting the identification number into a code having one-to-one correspondence to a character of the identification number,
decoder means (12) for decoding the code into a Reed-Solomon code and for detecting an error, and
notification means (13) for notifying an person who inputs, that the identification number entered is in error when the error is detected.

7. The identification number verification device according to Claim 6, wherein the decoder means (12) detects an error in the identification number and corrects the identification number found to be erroneous, and recognizes the corrected data as an identification number.

8. The identification number verification device according to Claim 7, wherein the decoder means (12) checks whether the result of the error correction meets identification number string rule.

9. The identification number verification device according to Claim 7, wherein when there is no code corresponding to an input character, the code converter means (11) notifies the decoder means (12) of the position of the corresponding code string as a missing position and the decoder means (12) corrects the missing error in response to the notification.
